# EUROPEAN PATENT APPLICATION

(11) **EP 4 507 364 A1**
(43) Date of publication of application: **12.02.2025**
(21) Application number: 23778525.8
(22) Date of filing: 03.04.2023
(51) Int. Cl.: H04W 24/02

(54) **CANDIDATE CELL PROCESSING METHOD AND APPARATUS, TERMINAL, AND NETWORK SIDE DEVICE**

(30) Priority: 01.04.2022 CN 202210349409
(71) Applicant: Vivo Mobile Communication Co., Ltd., Dongguan, Guangdong 523863 (CN)
(72) Inventor: LIU, Xuanbing, Dongguan, Guangdong 523863 (CN)
(74) Representative: Lavoix
(86) International application number: PCT/CN2023/085830
(87) International publication number: WO 2023/186161

(57) **Abstract**

This application pertains to the field of communication technologies, and discloses a candidate cell processing method and apparatus, a terminal, and a network-side device. The candidate cell processing method in embodiments of this application includes: receiving, by a terminal, configuration information of M candidate cells configured by a network-side device; and after a cell group change, performing, by the terminal, at least one of the following: deleting configuration information of N candidate cells, where N is a positive integer less than M; retaining configuration information of P candidate cells, where P is a positive integer less than or equal to M; in a case that first indication information indicates that the configuration information of all the candidate cells is to be deleted, deleting the configuration information of the M candidate cells; in a case that second indication information indicates that configuration information of candidate cells to be deleted is the configuration information of all the candidate cells, deleting the configuration information of the M candidate cells; and in a case that third indication information indicates that configuration information of no candidate cell is to be retained, deleting the configuration information of the M candidate cells, where the cell group change includes a change of a master cell group MCG and/or a secondary cell group SCG.

## Description

### CROSS-REFERENCE TO RELATED APPLICATIONS

This application claims priority to Chinese Patent Application No. 202210349409.9, filed in China on April 1, 2022, which is incorporated herein by reference in its entirety.

### TECHNICAL FIELD

This application pertains to the field of communication technologies, and specifically relates to a candidate cell processing method and apparatus, a terminal, and a network-side device.

### BACKGROUND

In an existing conditional primary secondary cell addition or change (Conditional PSCell Addition or Change, CPAC) procedure, after a CPAC is completed, a configured CPAC conditional configuration is released, and no candidate cell is retained. Therefore, if a network side does not reconfigure the CPAC, a terminal has no chance to continue to perform the CPAC based on a previously configured CPAC candidate cell.

### SUMMARY

Embodiments of this application provide a candidate cell processing method and apparatus, a terminal, and a network-side device to support a continuous conditional reconfiguration procedure.

According to a first aspect, a candidate cell processing method is provided and includes:
receiving, by a terminal, configuration information of M candidate cells configured by a network-side device, where M is a positive integer; and
after a cell group change, performing, by the terminal, at least one of the following:
   deleting configuration information of N candidate cells, where N is a positive integer less than M;
   retaining configuration information of P candidate cells, where P is a positive integer less than or equal to M;
   in a case that first indication information indicates that the configuration information of all the candidate cells is to be deleted, deleting the configuration information of the M candidate cells;
   in a case that second indication information indicates that configuration information of candidate cells to be deleted is the configuration information of all the candidate cells, deleting the configuration information of the M candidate cells; and
   in a case that third indication information indicates that configuration information of no candidate cell is to be retained, deleting the configuration information of the M candidate cells, where
   the first indication information is used to indicate whether to delete the configuration information of all the candidate cells;
   the second indication information is used to indicate the configuration information of the candidate cells to be deleted;
   the third indication information is used to indicate configuration information of candidate cells to be retained; and
   the cell group change includes a change of a master cell group MCG and/or a secondary cell group SCG.

According to a second aspect, a candidate cell processing apparatus is provided and includes:
a receiving module, configured to receive configuration information of M candidate cells configured by a network-side device, where M is a positive integer; and
a first processing module, configured to perform at least one of the following after a cell group change:
   deleting configuration information of N candidate cells, where N is a positive integer less than M;
   retaining configuration information of P candidate cells, where P is a positive integer less than or equal to M;
   in a case that first indication information indicates that the configuration information of all the candidate cells is to be deleted, deleting the configuration information of the M candidate cells;
   in a case that second indication information indicates that configuration information of candidate cells to be deleted is the configuration information of all the candidate cells, deleting the configuration information of the M candidate cells; and
   in a case that third indication information indicates that configuration information of no candidate cell is to be retained, deleting the configuration information of the M candidate cells, where
   the first indication information is used to indicate whether to delete the configuration information of all the candidate cells;
   the second indication information is used to indicate the configuration information of the candidate cells to be deleted;
   the third indication information is used to indicate configuration information of candidate cells to be retained; and
   the cell group change includes a change of a master cell group MCG and/or a secondary cell group SCG.

According to a third aspect, a candidate cell processing method is provided and includes:
sending, by a network-side device, configuration information of M candidate cells to a terminal, where M is a positive integer; and
after a cell group change, performing, by the network-side device, at least one of the following:
   deleting configuration information of N candidate cells, where N is a positive integer less than M;
   retaining configuration information of P candidate cells, where P is a positive integer less than or equal to M;
   in a case that first indication information indicates that the configuration information of all the candidate cells is to be deleted, deleting the configuration information of the M candidate cells;
   in a case that second indication information indicates that configuration information of candidate cells to be deleted is the configuration information of all the candidate cells, deleting the configuration information of the M candidate cells; and
   in a case that third indication information indicates that configuration information of no candidate cell is to be retained, deleting the configuration information of the M candidate cells, where
   the first indication information is used to indicate whether to delete the configuration information of all the candidate cells;
   the second indication information is used to indicate the configuration information of the candidate cells to be deleted;
   the third indication information is used to indicate configuration information of candidate cells to be retained; and
   the cell group change includes a change of a master cell group MCG and/or a secondary cell group SCG.

According to a fourth aspect, a candidate cell processing apparatus is provided and includes:
a sending module, configured to send configuration information of M candidate cells to a terminal, where M is a positive integer; and
a second processing module, configured to perform at least one of the following after a cell group change:
   deleting configuration information of N candidate cells, where N is a positive integer less than M;
   retaining configuration information of P candidate cells, where P is a positive integer less than or equal to M;
   in a case that first indication information indicates that the configuration information of all the candidate cells is to be deleted, deleting the configuration information of the M candidate cells;
   in a case that second indication information indicates that configuration information of candidate cells to be deleted is the configuration information of all the candidate cells, deleting the configuration information of the M candidate cells; and
   in a case that third indication information indicates that configuration information of no candidate cell is to be retained, deleting the configuration information of the M candidate cells, where
   the first indication information is used to indicate whether to delete the configuration information of all the candidate cells;
   the second indication information is used to indicate the configuration information of the candidate cells to be deleted;
   the third indication information is used to indicate configuration information of candidate cells to be retained; and
   the cell group change includes a change of a master cell group MCG and/or a secondary cell group SCG.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The communication interface is configured to receive configuration information of M candidate cells configured by a network-side device, where M is a positive integer; and the processor is configured to perform at least one of the following after a cell group change:
deleting configuration information of N candidate cells, where N is a positive integer less than M;
retaining configuration information of P candidate cells, where P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, where
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change includes a change of a master cell group MCG and/or a secondary cell group SCG.

According to a seventh aspect, a network-side device is provided. The network-side device includes a processor and a memory. The memory stores a program or instructions capable of running on the processor. When the program or instructions are executed by the processor, the steps of the method according to the third aspect are implemented.

According to an eighth aspect, a network-side device is provided and includes a processor and a communication interface. The communication interface is configured to send configuration information of M candidate cells to a terminal, where M is a positive integer; and
the processor is configured to perform at least one of the following after a cell group change:
deleting configuration information of N candidate cells, where N is a positive integer less than M;
retaining configuration information of P candidate cells, where P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, where
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change includes a change of a master cell group MCG and/or a secondary cell group SCG.

According to a ninth aspect, a communication system is provided and includes a network-side device and a terminal. The terminal may be configured to perform the steps of the candidate cell processing method according to the first aspect. The network-side device may be configured to perform the steps of the candidate cell processing method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the third aspect.

According to a twelfth aspect, a computer program or program product is provided. The computer program or program product is stored in a storage medium. The computer program or program product is executed by at least one processor to implement the candidate cell processing method according to the first aspect or implement the steps of the candidate cell processing method according to the third aspect.

In the embodiments of this application, after the cell group change, the configuration information of all the candidate cells may not be deleted, and configuration information of some candidate cells may be retained. Therefore, after the cell group change, the terminal can continue to perform a procedure of conditional handover (CHO), conditional primary secondary cell addition (CPA), or a conditional primary secondary cell change (CPC) based on the previously configured configuration information of the candidate cells, and the network-side device does not need to perform a reconfiguration.

### BRIEF DESCRIPTION OF DRAWINGS

FIG. 1 is a block diagram of a wireless communication system to which an embodiment of this application may be applied;
FIG. 2 is a schematic flowchart of a candidate cell processing method on a terminal side according to an embodiment of this application;
FIG. 3 is a schematic flowchart of a candidate cell processing method on a network-side device side according to an embodiment of this application;
FIG. 4 is a schematic structural diagram of a candidate cell processing apparatus on a terminal side according to an embodiment of this application;
FIG. 5 is a schematic structural diagram of a candidate cell processing apparatus on a network-side device side according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

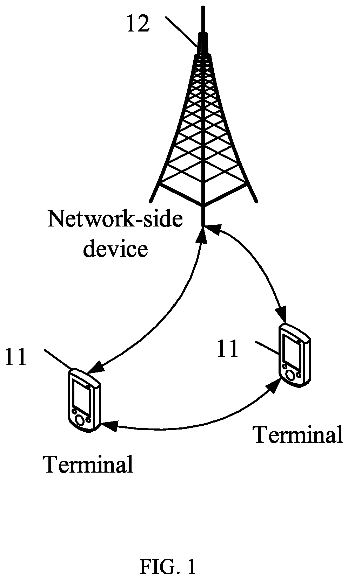

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

Dual connectivity (Dual Connectivity, DC) is to provide resources of two network nodes (access network elements) for a terminal (User Equipment, UE), where one of the two network nodes is referred to as a master node (Master node, MN) and the other is referred to as a secondary node (Secondary node, SN). At each network node, a carrier aggregation technology (CA) is used. To be specific, a series of serving cells controlled by the node, which are also referred to as a cell group (cell group), are configured for the UE. The master node MN controls a master cell group (Master Cell Group, MCG), and the secondary node SN controls a secondary cell group (Secondary Cell Group, SCG). Each cell group includes a special cell (Special Cell, SpCell) and a series of secondary cells (Secondary Cell, Scell). A special cell in the MCG is referred to as a primary cell (Primary Cell, PCell). A special cell in the SCG is referred to as a primary secondary cell (Primary Secondary Cell, PSCell). In a cell group, an SpCell uses a primary carrier, while other secondary cells use secondary carriers, and resource scheduling in the cell group is performed by the SpCell.

A conditional primary secondary cell addition or change (Conditional PSCell Addition or Change, CPAC) procedure includes:

### (1) Conditional primary secondary cell addition (Conditional PSCell Addition, CPA)

The conditional primary secondary cell addition is primary secondary cell addition performed after UE evaluates an execution condition and the execution condition is met.

A CPA configuration includes a configuration and an execution condition of a CPA candidate cell. The execution condition may include one or two trigger conditions.

### Conditional primary secondary cell change (Conditional PSCell Change, CPC)

The conditional primary secondary cell change is a primary secondary cell change performed after the UE evaluates an execution condition and the execution condition is met. The UE starts to evaluate the execution condition after receiving a CPC configuration. The UE stops evaluating the execution condition after the primary secondary cell change is triggered.

A CPC configuration includes a configuration and an execution condition of a CPC candidate cell. The execution condition may include one or two trigger conditions. Once a primary secondary cell change procedure is successfully completed, the UE releases all stored CPC configurations.

The CPC includes a variety of scenarios, such as:
- intra-secondary-node conditional primary secondary cell change (Intra-SN CPC);
- master node initiated inter-secondary-node conditional primary secondary cell change (MN initiated Inter-SN CPC); and
- secondary node initiated inter-secondary-node conditional primary secondary cell change (SN initiated Inter-SN CPC).

The secondary node initiated inter-secondary-node conditional primary secondary cell change includes the following procedure:
Step 1: A source secondary node (Source-SN, S-SN) initiates a CPAC.
Step 2: A master node MN sends a secondary node addition request to at least one target secondary node (Target-SN, T-SN).
Step 3: The T-SN sends secondary node addition confirmation information to the MN, where the confirmation information includes one or more candidate cell configurations.
Step 4: Optionally, the MN sends candidate PSCell acceptance information to the S-SN.
Step 5: Optionally, the S-SN updates CPAC configuration information.
Step 6: The MN sends early data forwarding information.
Step 7: The MN sends a radio resource control (Radio Resource Control, RRC) reconfiguration message to the UE, where the message includes a CPAC command.
Step 8: The UE sends a reconfiguration complete message to confirm that the RRC reconfiguration message is received.
Step 9: The UE triggers a CPAC execution condition and sends an RRC reconfiguration complete message.
Step 10: The MN sends an SN change confirmation message to the S-SN.
Step 11: The MN sends a secondary node reconfiguration complete message to the T-SN.
Step 12: The UE randomly accesses the T-SN.

Subsequent steps are omitted.

In an existing CPAC procedure, after a CPAC is completed, a configured CPAC conditional configuration is released, and no candidate cell is retained. Therefore, if a network side does not reconfigure the CPAC, a terminal has no chance to continue to perform the CPAC based on a previously configured CPAC candidate cell.

A candidate cell processing method provided in the embodiments of this application is hereinafter described in detail by using some embodiments and application scenarios thereof with reference to the accompanying drawings.

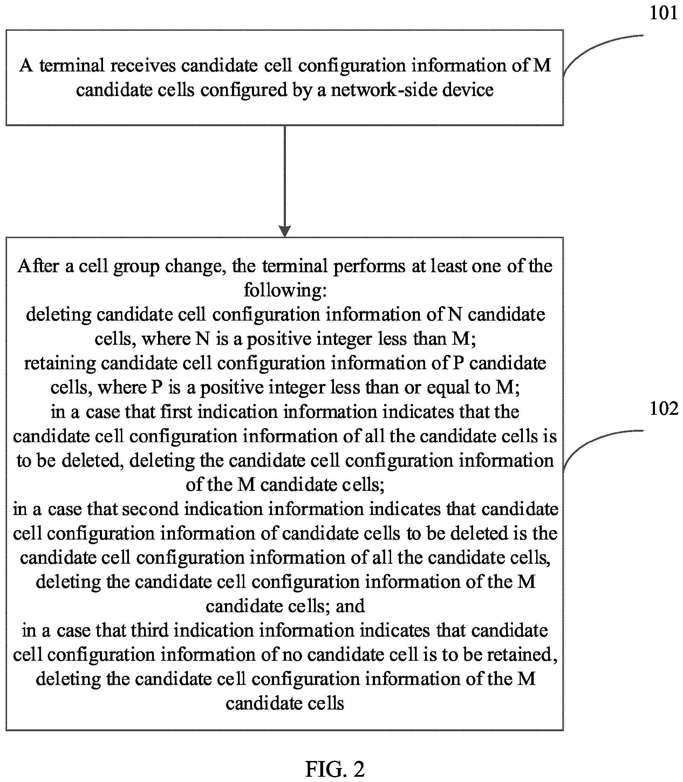

An embodiment of this application provides a candidate cell processing method. As shown in FIG. 2, the method includes the following steps.

Step 101: A terminal receives configuration information of M candidate cells configured by a network-side device, where M is a positive integer.

After a cell group change, the terminal performs at least one of the following:
deleting configuration information of N candidate cells, where N is a positive integer less than M;
retaining configuration information of P candidate cells, where P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, where
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change includes a change of a master cell group MCG and/or a secondary cell group SCG.

In this embodiment of this application, after the cell group change, the configuration information of all the candidate cells may not be deleted, and configuration information of some candidate cells may be retained. Therefore, after the cell group change, the terminal can continue to perform a procedure of conditional handover (CHO), conditional primary secondary cell addition (CPA), or a conditional primary secondary cell change (CPC) based on the previously configured configuration information of the candidate cells, and the network-side device does not need to perform a reconfiguration.

The configuration information of the candidate cells includes the candidate cells (such as identity (Identity Document, ID) of the candidate cells) and/or configuration information associated with the candidate cells, where the configuration information associated with the candidate cells may include at least one of the following: a conditional reconfiguration (for example, ConditionalReconfiguration, where this information element is used to add, modify, or release a configuration of the conditional reconfiguration) and a trigger condition for performing the conditional reconfiguration.

In this embodiment, after the cell group change, a single candidate cell may be deleted or retained, or all the candidate cells may be deleted or retained, or candidate cells configured by an MN or an SN may be deleted or retained, so that a candidate cell can be deleted or retained flexibly.

In some embodiments, in a case that the network-side device configures only the first indication information, the deleting configuration information of N candidate cells includes: in a case that the first indication information indicates that the configuration information of all the candidate cells is not to be deleted, deleting the configuration information of the N candidate cells; or
the retaining configuration information of P candidate cells includes: in a case that the first indication information indicates that the configuration information of all the candidate cells is not to be deleted, retaining the configuration information of the P candidate cells.

The first indication information may indicate support for continuous CPA and/or a continuous CPC. For example, the first indication information is subsequentCPAC, and if subsequentCPAC or a value of subsequentCPAC is set to TRUE, it indicates that a continuous CPAC procedure is supported, that is, the configuration information of all the candidate cells is not to be deleted.

In some embodiments, the first indication information is included in a radio resource control RRC reconfiguration message. The first indication information is not limited to being included in the radio resource control RRC reconfiguration message, but may also be carried by a newly defined message.

In an optional example, the terminal receives the RRC reconfiguration message, where the RRC reconfiguration message includes the conditional reconfiguration and the first indication information, and the conditional reconfiguration includes a list CondReconfigToAddMod, where the list may include at least one of the following: a conditional reconfiguration identifier, configuration information corresponding to a plurality of candidate cells, and a trigger condition that needs to be met to trigger execution of the conditional reconfiguration. The configuration information corresponding to the plurality of candidate cells may be configuration information of the candidate cells.

In some embodiments, the first indication information is included in at least one of the following information elements:
a conditional reconfiguration information element conditionalReconfiguration corresponding to the MCG; and
a conditional reconfiguration information element mrdc-SecondaryCellGroup corresponding to the SCG.

In some embodiments, the first indication information explicitly indicates whether to delete the configuration information of all the candidate cells. For example, if a value of the first indication information is TRUE, the configuration information of all the candidate cells is to be deleted, or if a value of the first indication information is not TRUE, the configuration information of all the candidate cells is not to be deleted; or if a value of the first indication information is not TRUE, the configuration information of all the candidate cells is to be deleted, or if a value of the first indication information is TRUE, the configuration information of all the candidate cells is not to be deleted.

Alternatively, whether to delete the configuration information of all the candidate cells is indicated by whether the first indication information is configured. For example, if the first indication information is configured, the first indication information indicates that all the candidate cells are to be deleted; or if the first indication information is not configured, the first indication information indicates that all the candidate cells are not to be deleted. Alternatively, if the first indication information is not configured, the first indication information indicates that all the candidate cells are to be deleted; or if the first indication information is configured, the first indication information indicates that all the candidate cells are not to be deleted.

In a specific example, after a random access procedure is successfully completed in the SCG, if the CPA or CPC is configured and the first indication information is not configured, the terminal deletes all candidate entries (that is, all CPA or CPC candidate cells) included in a conditional reconfiguration variable (VarConditionalReconfig); and if spCellConfig of the SCG includes reconfigurationWithSync, and the CPA or CPC is configured, but a subsequent CPAC (subsequent CPAC) is not configured, the terminal deletes all entries (Entry) in VarConditionalReconfig.

In another specific example, after the cell group change, the terminal deletes all entries that are included in the conditional reconfiguration variable (VarConditionalReconfig) and that are not configured with the first indication information.

In some embodiments, in a case that the network-side device configures only the second indication information and/or the third indication information, the deleting configuration information of N candidate cells includes:
determining to delete the configuration information of the N candidate cells based on the second indication information or the third indication information, where the second indication information is used to indicate the configuration information of the candidate cells to be deleted, and the third indication information is used to indicate the configuration information of the candidate cells to be retained.

The second indication information may flexibly indicate configuration information of candidate cells that need to be deleted, and the deleting configuration information of N candidate cells includes: deleting the candidate cells to be deleted as indicated by the second indication information and configuration information associated with the candidate cells. The third indication information may flexibly indicate configuration information of candidate cells that need to be retained, and the retaining configuration information of P candidate cells includes: retaining the candidate cells to be retained as indicated by the third indication information and configuration information associated with the candidate cells.

In some embodiments, the third indication information may be CandidateKept. If CandidateKept or a value of CandidateKept is set to TRUE for configuration information of candidate cells, it indicates that the configuration information of the corresponding candidate cells is required.

In some embodiments, the retaining configuration information of P candidate cells includes:
determining to retain the configuration information of the P candidate cells based on the second indication information or the third indication information, where the second indication information is used to indicate the configuration information of the candidate cells to be deleted, and the third indication information is used to indicate the configuration information of the candidate cells to be retained.

In this way, the second indication information may flexibly indicate configuration information of candidate cells that need to be deleted or retained, and the deleting configuration information of N candidate cells includes: deleting the candidate cells to be deleted as indicated by the second indication information and configuration information associated with the candidate cells; and the retaining configuration information of P candidate cells includes: retaining the candidate cells and configuration information associated with the candidate cells other than the configuration information of the candidate cells indicated by the second indication information.

The third indication information may flexibly indicate configuration information of candidate cells that need to be deleted or retained, and the deleting configuration information of N candidate cells includes: deleting the candidate cells and configuration information associated with the candidate cells other than the configuration information of the candidate cells indicated by the third indication information; and the retaining configuration information of P candidate cells includes: retaining the candidate cells indicated by the third indication information and configuration information associated with the candidate cells.

In some embodiments, the second indication information or the third indication information is configured for a target object, and the target object includes at least one of the following:
configuration information of each candidate cell, that is, the second indication information or the third indication information is configured for each conditional reconfiguration procedure or each candidate cell, where the second indication information or the third indication information is used to indicate whether a corresponding candidate cell or a corresponding conditional reconfiguration procedure is to be retained after the cell group change, for example, if the third indication information is configured for candidate cell A, candidate cell A is retained after the cell group change; or for example, if the second indication information is configured for candidate cell B, candidate cell B is not retained after the cell group change;
each cell group, that is, the second indication information or the third indication information is configured based on a cell group, such as the master cell group MCG or the secondary cell group SCG, where the second indication information or the third indication information is used to indicate whether a candidate cell in a corresponding cell group configuration or a corresponding conditional reconfiguration procedure is to be retained after the cell group change, for example, the third indication information may indicate that a candidate cell in an SCG configuration or a conditional reconfiguration procedure is to be retained;
each network node, where the network node includes an MN and/or an SN, that is, it is indicated, based on a node that initiates a CPAC, that a candidate cell or a conditional reconfiguration configured by the node is to be retained, for example, the third indication information indicates that a candidate cell or a conditional reconfiguration initiated by the SN is to be retained; and
each configuration scenario, that is, it is indicated, based on a CPAC configuration scenario, that a candidate cell or a conditional reconfiguration configured in the configuration scenario is to be retained, where the configuration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change, for example, the third indication information indicates that a candidate cell in the secondary node initiated inter-secondary-node conditional primary secondary cell change (SN initiated Inter-SN CPC) or a conditional reconfiguration is to be retained.

In some embodiments, in a case that the second indication information is correspondingly configured for configuration information of a first candidate cell, the second indication information indicates that the configuration information of the first candidate cell is to be deleted; or
in a case that the third indication information is correspondingly configured for configuration information of a second candidate cell, the third indication information indicates that the configuration information of the second candidate cell is to be retained; or
in a case that the second indication information is correspondingly configured for a first cell group MCG or SCG, the second indication information indicates that configuration information of all candidate cells in the first cell group is to be deleted; or
in a case that the third indication information is correspondingly configured for a second cell group, the third indication information indicates that configuration information of all candidate cells in the second cell group is to be retained; or
in a case that the second indication information is correspondingly configured for a first network node, the second indication information indicates that configuration information of all candidate cells initiated by the first network node is to be deleted; or
in a case that the third indication information is correspondingly configured for a second network node, the third indication information indicates that configuration information of all candidate cells initiated by the second network node is to be retained; or
in a case that the second indication information is correspondingly configured for a first configuration scenario, the second indication information indicates that configuration information of all candidate cells in the first configuration scenario is to be deleted; or
in a case that the third indication information is correspondingly configured for a second configuration scenario, the third indication information indicates that configuration information of all candidate cells in the second configuration scenario is to be retained.

The second indication information explicitly indicates which candidate cells are to be deleted, and configuration information of the candidate cells configured with the second indication information may be deleted; and/or the third indication information explicitly indicates which candidate cells are to be retained, and configuration information of the candidate cells configured with the third indication information may be retained.

Alternatively, the second indication information implicitly indicates which candidate cells are to be retained, and configuration information of candidate cells not configured with the second indication information may be retained; and/or the third indication information implicitly indicates which candidate cells are to be deleted, and configuration information of candidate cell not configured with the third indication information may be deleted.

In an implementation, if the third indication information is CandidateKept, all entries not configured with CandidateKept in VarConditionalReconfig are deleted.

In some embodiments, the deleted configuration information of the N candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition (MN initiated CPA), a master node initiated inter-secondary-node conditional primary secondary cell change (MN initiated Inter-SN CPC), an intra-secondary-node conditional primary secondary cell change (Intra-SN CPC), and a secondary node initiated inter-secondary-node conditional primary secondary cell change (SN initiated Inter-SN CPC).

For example, after the cell group change, the terminal may delete entries included in a conditional reconfiguration variable (VarConditionalReconfig).

In some embodiments, the retained configuration information of the P candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

For example, after the cell group change, the terminal may retain entries included in a conditional reconfiguration variable (VarConditionalReconfig).

In some embodiments, the cell group change includes at least one of the following:
a conditional reconfiguration of conditional handover during running of a first timer after a cell selection is performed, where the first timer is a timer for limiting cell selection duration in an RRC connection reestablishment procedure, the first timer is started when the RRC reestablishment procedure is initiated, the first timer is stopped when a suitable cell is selected, and the first timer enters an idle state after the first timer expires;
a cell group change after successful completion of a random access procedure in the MCG or the SCG;
MCG handover or SCG handover;
conditional handover CHO;
conditional primary secondary cell addition CPA; and
a conditional primary secondary cell change CPC.

In some embodiments, the configuration information of the N candidate cells further includes at least one of the following:
candidate cells configured in the MCG and/or the SCG;
a conditional handover CHO candidate cell;
a conditional primary secondary cell addition or change CPAC candidate cell carried in a CHO candidate cell configuration;
a used candidate cell;
a source primary secondary cell source PSCell on which a CPAC procedure is performed;
a target candidate cell on which a CPAC fails to be performed;
a primary secondary cell before the SCG change;
a candidate cell that is released or not configured in a measurement configuration associated with an execution condition, where the measurement configuration is a measurement object (measObject) corresponding to an execution condition measurement ID (MeasID), a report configuration (reportConfig), or the like;
a candidate cell whose conditional reconfiguration is a Delta configuration, where for example, a configuration of a candidate primary secondary cell is a Delta configuration provided based on a source primary secondary cell source-PSCell, and after a primary secondary cell change, the candidate primary secondary cell or a conditional reconfiguration corresponding to the candidate primary secondary cell is not to be retained; and
an intra-secondary-node conditional primary secondary cell change intra-SN CPC candidate cell.

Further, even if the first indication information and/or the third indication information are/is configured, the terminal performs the foregoing operation of releasing or deleting or not retaining the configuration information of the N candidate cells. To be specific, a priority of the foregoing operation is higher than a priority of the first indication information and/or a priority of the third indication information. For example, if the third indication information is configured for an intra-SN CPC candidate cell, the terminal still releases or deletes or does not retain the intra-secondary-node conditional primary secondary cell change intra-SN CPC candidate cell.

In some embodiments, the retained configuration information of the P candidate cells further includes:
candidate cells configured in the MCG and/or the SCG.

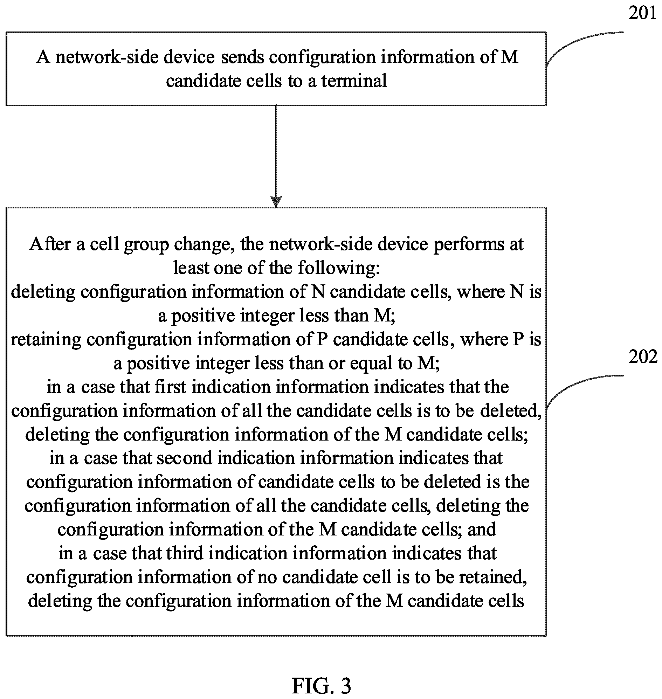

An embodiment of this application further provides a candidate cell processing method. As shown in FIG. 3, the method includes the following steps.

Step 201: A network-side device sends configuration information of M candidate cells to a terminal, where M is a positive integer.

After a cell group change, the network-side device performs at least one of the following:
deleting configuration information of N candidate cells, where N is a positive integer less than M;
retaining configuration information of P candidate cells, where P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, where
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change includes a change of a master cell group MCG and/or a secondary cell group SCG.

In this embodiment of this application, after the cell group change, the configuration information of all the candidate cells may not be deleted, and configuration information of some candidate cells may be retained. Therefore, after the cell group change, the terminal can continue to perform a procedure of conditional handover (CHO), conditional primary secondary cell addition (CPA), or a conditional primary secondary cell change (CPC) based on the previously configured configuration information of the candidate cells, and the network-side device does not need to perform a reconfiguration.

In this embodiment, after the cell group change, the network-side device performs an operation consistent with that on the terminal side, so that a waste of network resources can be avoided.

The configuration information of the candidate cells includes the candidate cells (such as IDs of the candidate cells) and/or configuration information associated with the candidate cells, where the configuration information associated with the candidate cells may include at least one of the following: a conditional reconfiguration (for example, ConditionalReconfiguration, where this information element is used to add, modify, or release a configuration of the conditional reconfiguration) and a trigger condition for performing the conditional reconfiguration.

In this embodiment, after the cell group change, a single candidate cell may be deleted or retained, or all the candidate cells may be deleted or retained, or candidate cells configured by an MN or an SN may be deleted or retained, so that a candidate cell can be deleted or retained flexibly.

In some embodiments, in a case that the network-side device configures only the first indication information for the terminal, the deleting configuration information of N candidate cells includes: in a case that the first indication information indicates that the configuration information of all the candidate cells is not to be deleted, deleting the configuration information of the N candidate cells; or
the retaining configuration information of P candidate cells includes: in a case that the first indication information indicates that the configuration information of all the candidate cells is not to be deleted, retaining the configuration information of the P candidate cells.

The first indication information may indicate support for continuous CPA and/or a continuous CPC. For example, the first indication information is subsequentCPAC, and if subsequentCPAC or a value of subsequentCPAC is set to TRUE, it indicates that a continuous CPAC procedure is supported, that is, the configuration information of all the candidate cells is not to be deleted.

In some embodiments, the first indication information is included in a radio resource control RRC reconfiguration message. The first indication information is not limited to being included in the radio resource control RRC reconfiguration message, but may also be carried by a newly defined message.

In an optional example, the network-side device sends the RRC reconfiguration message, where the RRC reconfiguration message includes the conditional reconfiguration and the first indication information, and the conditional reconfiguration includes a list CondReconfigToAddMod, where the list may include at least one of the following: a conditional reconfiguration identifier, configuration information corresponding to a plurality of candidate cells, and a trigger condition that needs to be met to trigger execution of the conditional reconfiguration. The configuration information corresponding to the plurality of candidate cells may be configuration information of the candidate cells.

In some embodiments, the first indication information is included in at least one of the following information elements:
a conditional reconfiguration information element conditionalReconfiguration corresponding to the MCG; and
a conditional reconfiguration information element mrdc-SecondaryCellGroup corresponding to the SCG.

In some embodiments, the first indication information explicitly indicates whether to delete the configuration information of all the candidate cells. For example, if a value of the first indication information is TRUE, the configuration information of all the candidate cells is to be deleted, or if a value of the first indication information is not TRUE, the configuration information of all the candidate cells is not to be deleted; or if a value of the first indication information is not TRUE, the configuration information of all the candidate cells is to be deleted, or if a value of the first indication information is TRUE, the configuration information of all the candidate cells is not to be deleted.

Alternatively, whether to delete the configuration information of all the candidate cells is indicated by whether the first indication information is configured. For example, if the first indication information is configured, the first indication information indicates that all the candidate cells are to be deleted; or if the first indication information is not configured, the first indication information indicates that all the candidate cells are not to be deleted. Alternatively, if the first indication information is not configured, the first indication information indicates that all the candidate cells are to be deleted; or if the first indication information is configured, the first indication information indicates that all the candidate cells are not to be deleted.

In a specific example, after a random access procedure is successfully completed in the SCG, if the CPA or CPC is configured and the first indication information is not configured, the terminal deletes all candidate entries (that is, all CPA or CPC candidate cells) included in a conditional reconfiguration variable (VarConditionalReconfig); and if spCellConfig of the SCG includes reconfigurationWithSync, and the CPA or CPC is configured, but a subsequent CPAC (subsequent CPAC) is not configured, the terminal deletes all entries (Entry) in VarConditionalReconfig.

In another specific example, after the cell group change, the terminal deletes all entries that are included in the conditional reconfiguration variable (VarConditionalReconfig) and that are not configured with the first indication information.

In some embodiments, in a case that the network-side device configures only the second indication information and/or the third indication information for the terminal, the deleting configuration information of N candidate cells includes:
determining to delete the configuration information of the N candidate cells based on the second indication information or the third indication information, where the second indication information is used to indicate the configuration information of the candidate cells to be deleted, and the third indication information is used to indicate the configuration information of the candidate cells to be retained.

The second indication information may flexibly indicate configuration information of candidate cells that need to be deleted, and the deleting configuration information of N candidate cells includes: deleting the candidate cells to be deleted as indicated by the second indication information and configuration information associated with the candidate cells. The third indication information may flexibly indicate configuration information of candidate cells that need to be retained, and the retaining configuration information of P candidate cells includes: retaining the candidate cells to be retained as indicated by the third indication information and configuration information associated with the candidate cells.

In some embodiments, the third indication information may be CandidateKept. If CandidateKept or a value of CandidateKept is set to TRUE for configuration information of candidate cells, it indicates that the configuration information of the corresponding candidate cells is required.

In some embodiments, the retaining configuration information of P candidate cells includes:
determining to retain the configuration information of the P candidate cells based on the second indication information or the third indication information, where the second indication information is used to indicate the configuration information of the candidate cells to be deleted, and the third indication information is used to indicate the configuration information of the candidate cells to be retained.

In this way, the second indication information may flexibly indicate configuration information of candidate cells that need to be deleted or retained, and the deleting configuration information of N candidate cells includes: deleting the candidate cells to be deleted as indicated by the second indication information and configuration information associated with the candidate cells; and the retaining configuration information of P candidate cells includes: retaining the candidate cells and configuration information associated with the candidate cells other than the configuration information of the candidate cells indicated by the second indication information.

The third indication information may flexibly indicate configuration information of candidate cells that need to be deleted or retained, and the deleting configuration information of N candidate cells includes: deleting the candidate cells and configuration information associated with the candidate cells other than the configuration information of the candidate cells indicated by the third indication information; and the retaining configuration information of P candidate cells includes: retaining the candidate cells indicated by the third indication information and configuration information associated with the candidate cells.

In some embodiments, the first indication information explicitly indicates whether to delete the configuration information of all the candidate cells, or
whether to delete the configuration information of all the candidate cells is indicated by whether the first indication information is configured.

In some embodiments, the second indication information or the third indication information is configured for a target object, and the target object includes at least one of the following:
configuration information of each candidate cell, that is, the second indication information or the third indication information is configured for each conditional reconfiguration procedure or each candidate cell, where the second indication information or the third indication information is used to indicate whether a corresponding candidate cell or a corresponding conditional reconfiguration procedure is to be retained after the cell group change, for example, if the third indication information is configured for candidate cell A, candidate cell A is retained after the cell group change; or for example, if the second indication information is configured for candidate cell B, candidate cell B is not retained after the cell group change;
each cell group, that is, the second indication information or the third indication information is configured based on a cell group, such as the master cell group MCG or the secondary cell group SCG, where the second indication information or the third indication information is used to indicate whether a candidate cell in a corresponding cell group configuration or a corresponding conditional reconfiguration procedure is to be retained after the cell group change, for example, the third indication information may indicate that a candidate cell in an SCG configuration or a conditional reconfiguration procedure is to be retained;
each network node, where the network node includes an MN and/or an SN, that is, it is indicated, based on a node that initiates a CPAC, that a candidate cell or a conditional reconfiguration configured by the node is to be retained, for example, the third indication information indicates that a candidate cell or a conditional reconfiguration initiated by the SN is to be retained; and
each configuration scenario, that is, it is indicated, based on a CPAC configuration scenario, that a candidate cell or a conditional reconfiguration configured in the configuration scenario is to be retained, where the configuration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change, for example, the third indication information indicates that a candidate cell in the secondary node initiated inter-secondary-node conditional primary secondary cell change (SN initiated Inter-SN CPC) or a conditional reconfiguration is to be retained.

In some embodiments, in a case that the second indication information is correspondingly configured for configuration information of a first candidate cell, the second indication information indicates that the configuration information of the first candidate cell is to be deleted; or
in a case that the third indication information is correspondingly configured for configuration information of a second candidate cell, the third indication information indicates that the configuration information of the second candidate cell is to be retained; or
in a case that the second indication information is correspondingly configured for a first cell group MCG or SCG, the second indication information indicates that configuration information of all candidate cells in the first cell group is to be deleted; or
in a case that the third indication information is correspondingly configured for a second cell group, the third indication information indicates that configuration information of all candidate cells in the second cell group is to be retained; or
in a case that the second indication information is correspondingly configured for a first network node, the second indication information indicates that configuration information of all candidate cells initiated by the first network node is to be deleted; or
in a case that the third indication information is correspondingly configured for a second network node, the third indication information indicates that configuration information of all candidate cells initiated by the second network node is to be retained; or
in a case that the second indication information is correspondingly configured for a first configuration scenario, the second indication information indicates that configuration information of all candidate cells in the first configuration scenario is to be deleted; or
in a case that the third indication information is correspondingly configured for a second configuration scenario, the third indication information indicates that configuration information of all candidate cells in the second configuration scenario is to be retained.

The second indication information explicitly indicates which candidate cells are to be deleted, and configuration information of the candidate cells configured with the second indication information may be deleted; and/or the third indication information explicitly indicates which candidate cells are to be retained, and configuration information of the candidate cells configured with the third indication information may be retained.

Alternatively, the second indication information implicitly indicates which candidate cells are to be retained, and configuration information of candidate cells not configured with the second indication information may be retained; and/or the third indication information implicitly indicates which candidate cells are to be deleted, and configuration information of candidate cell not configured with the third indication information may be deleted.

In an implementation, if the third indication information is CandidateKept, all entries not configured with CandidateKept in VarConditionalReconfig are deleted.

In some embodiments, the configuration information of the N candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

For example, after the cell group change, the terminal may delete entries included in a conditional reconfiguration variable (VarConditionalReconfig).

In some embodiments, the configuration information of the P candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

For example, after the cell group change, the terminal may retain entries included in a conditional reconfiguration variable (VarConditionalReconfig).

In some embodiments, the cell group change includes at least one of the following:
a conditional reconfiguration of conditional handover during running of a first timer after a cell selection is performed, where the first timer is a timer for limiting cell selection duration in an RRC connection reestablishment procedure, the first timer is started when the RRC reestablishment procedure is initiated, the first timer is stopped when a suitable cell is selected, and the first timer enters an idle state after the first timer expires;
a cell group change after successful completion of a random access procedure in the MCG or the SCG;
MCG handover or SCG handover;
conditional handover CHO;
conditional primary secondary cell addition CPA; and
a conditional primary secondary cell change CPC.

In some embodiments, the configuration information of the N candidate cells further includes at least one of the following:
candidate cells configured in the MCG and/or the SCG;
a conditional handover CHO candidate cell;
a conditional primary secondary cell addition or change CPAC candidate cell carried in a CHO candidate cell configuration;
a used candidate cell;
a source primary secondary cell source PSCell on which a CPAC procedure is performed;
a target candidate cell on which a CPAC fails to be performed;
a primary secondary cell before the SCG change;
a candidate cell that is released or not configured in a measurement configuration associated with an execution condition, where the measurement configuration is a measurement object (measObject) corresponding to an execution condition measurement ID (MeasID), a report configuration (reportConfig), or the like;
a candidate cell whose conditional reconfiguration is a Delta configuration, where for example, a configuration of a candidate primary secondary cell is a Delta configuration provided based on a source primary secondary cell source-PSCell, and after a primary secondary cell change, the candidate primary secondary cell or a conditional reconfiguration corresponding to the candidate primary secondary cell is not to be retained; and
an intra-secondary-node conditional primary secondary cell change intra-SN CPC candidate cell.

Further, even if the network-side device configures the first indication information and/or the third indication information, the network-side device performs the foregoing operation of releasing or deleting or not retaining the configuration information of the N candidate cells. To be specific, a priority of the foregoing operation is higher than a priority of the first indication information and/or a priority of the third indication information. For example, if the third indication information is configured for an intra-SN CPC candidate cell, the terminal still releases or deletes or does not retain the intra-secondary-node conditional primary secondary cell change intra-SN CPC candidate cell.

In some embodiments, the configuration information of the P candidate cells further includes:
retaining candidate cells configured in the MCG and/or the SCG.

In some embodiments, in a case that at least one candidate cell is retained, the network-side device does not change a measurement configuration associated with a conditional reconfiguration in an RRC reconfiguration procedure, where the measurement configuration includes at least one of the following associated with an execution condition:
a measurement identifier MeasID;
a measurement object MeasObject;
a measurement report configuration MeasReportConfig; and
a conditional trigger configuration.

In some embodiments, the method further includes:
after an RRC reconfiguration procedure succeeds, the MN instructs another target candidate secondary node to cancel configuration information of a specific candidate cell, where the configuration information of the specific candidate cell includes at least one of the following:
configuration information of a candidate cell not configured with the first indication information;
configuration information of a candidate cell not configured with the third indication information;
configuration information of a candidate cell configured with the second indication information;
configuration information of the candidate cells configured in the MCG and/or the SCG;
configuration information of the CHO candidate cell;
configuration information of a candidate cell carried in the CHO candidate cell configuration;
configuration information of the used candidate cell;
the source PSCell on which the CPAC procedure is performed;
the target candidate cell on which the CPAC fails to be performed;
the primary secondary cell before the SCG change;
configuration information of the candidate cell that is released or not configured in the measurement configuration associated with the execution condition;
configuration information of the candidate cell whose conditional reconfiguration is the Delta configuration;
configuration information of the intra-secondary-node conditional primary secondary cell change intra-SN CPC candidate cell;
configuration information of a candidate cell in the conditional reconfiguration procedure initiated by the MN and/or the SN; and
configuration information of a candidate cell in the preset conditional reconfiguration scenario, where the preset conditional reconfiguration scenario includes at least one of the following: the master node initiated conditional primary secondary cell addition, the master node initiated inter-secondary-node conditional primary secondary cell change, the intra-secondary-node conditional primary secondary cell change, and the secondary node initiated inter-secondary-node conditional primary secondary cell change.

The candidate cell processing method provided in the embodiments of this application may be performed by a candidate cell processing apparatus. A candidate cell processing apparatus provided in the embodiments of this application is described by assuming that the candidate cell processing method is performed by the candidate cell processing apparatus in the embodiments of this application.

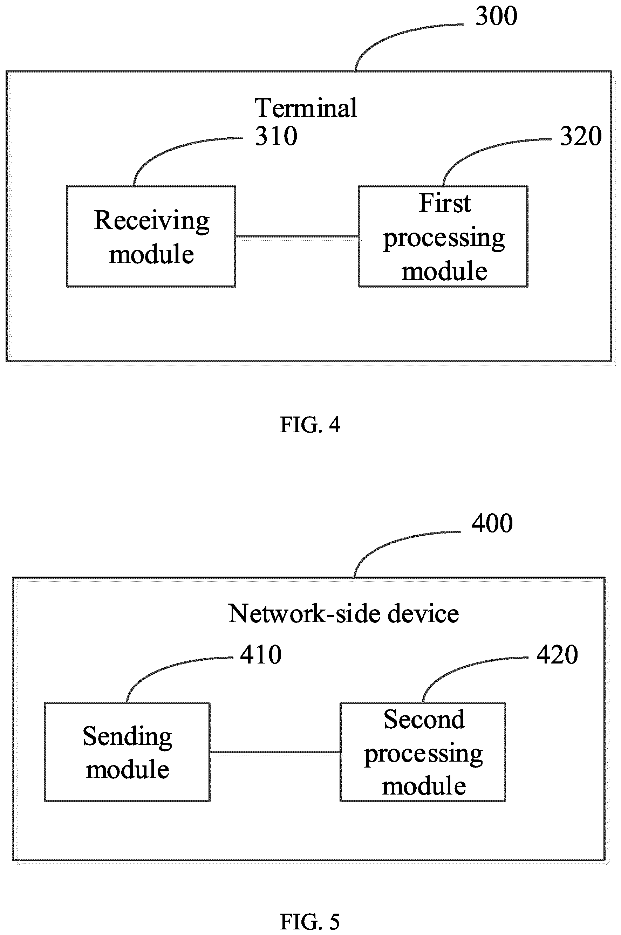

An embodiment of this application provides a candidate cell processing apparatus, applied to a terminal 300. As shown in FIG. 4, the apparatus includes:
a receiving module 310, configured to receive configuration information of M candidate cells configured by a network-side device, where M is a positive integer; and
a first processing module 320, configured to perform at least one of the following after a cell group change:
   deleting configuration information of N candidate cells, where N is a positive integer less than M;
   retaining configuration information of P candidate cells, where P is a positive integer less than or equal to M;
   in a case that first indication information indicates that the configuration information of all the candidate cells is to be deleted, deleting the configuration information of the M candidate cells;
   in a case that second indication information indicates that configuration information of candidate cells to be deleted is the configuration information of all the candidate cells, deleting the configuration information of the M candidate cells; and
   in a case that third indication information indicates that configuration information of no candidate cell is to be retained, deleting the configuration information of the M candidate cells, where
   the first indication information is used to indicate whether to delete the configuration information of all the candidate cells;
   the second indication information is used to indicate the configuration information of the candidate cells to be deleted;
   the third indication information is used to indicate configuration information of candidate cells to be retained; and
   the cell group change includes a change of a master cell group MCG and/or a secondary cell group SCG.

In this embodiment of this application, after the cell group change, the configuration information of all the candidate cells may not be deleted, and configuration information of some candidate cells may be retained. Therefore, after the cell group change, the terminal can continue to perform a procedure of conditional handover (CHO), conditional primary secondary cell addition (CPA), or a conditional primary secondary cell change (CPC) based on the previously configured configuration information of the candidate cells, and the network-side device does not need to perform a reconfiguration.

In some embodiments, the configuration information of the candidate cells includes the candidate cells and/or configuration information associated with the candidate cells, where the configuration information includes a conditional reconfiguration and/or a trigger condition for performing the conditional reconfiguration.

In some embodiments, in a case that the first indication information indicates that the configuration information of all the candidate cells is not to be deleted, the first processing module 320 is configured to delete the configuration information of the N candidate cells; or
in a case that the first indication information indicates that the configuration information of all the candidate cells is not to be deleted, the first processing module 320 is configured to retain the configuration information of the P candidate cells.

In some embodiments, the first processing module 320 is configured to determine to delete the configuration information of the N candidate cells based on the second indication information or the third indication information, where the second indication information is used to indicate the configuration information of the candidate cells to be deleted, and the third indication information is used to indicate the configuration information of the candidate cells to be retained.

In some embodiments, the first processing module 320 is configured to determine to retain the configuration information of the P candidate cells based on the second indication information or the third indication information, where the second indication information is used to indicate the configuration information of the candidate cells to be deleted, and the third indication information is used to indicate the configuration information of the candidate cells to be retained.

In some embodiments, the first indication information explicitly indicates whether to delete the configuration information of all the candidate cells, or
whether to delete the configuration information of all the candidate cells is indicated by whether the first indication information is configured.

In some embodiments, the second indication information or the third indication information is configured for a target object, and the target object includes at least one of the following:
configuration information of each candidate cell;
each cell group;
each network node; and
each configuration scenario, where the configuration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, in a case that the second indication information is correspondingly configured for configuration information of a first candidate cell, the second indication information indicates that the configuration information of the first candidate cell is to be deleted; or
in a case that the third indication information is correspondingly configured for configuration information of a second candidate cell, the third indication information indicates that the configuration information of the second candidate cell is to be retained; or
in a case that the second indication information is correspondingly configured for a first cell group, the second indication information indicates that configuration information of all candidate cells in the first cell group is to be deleted; or
in a case that the third indication information is correspondingly configured for a second cell group, the third indication information indicates that configuration information of all candidate cells in the second cell group is to be retained; or
in a case that the second indication information is correspondingly configured for a first network node, the second indication information indicates that configuration information of all candidate cells initiated by the first network node is to be deleted; or
in a case that the third indication information is correspondingly configured for a second network node, the third indication information indicates that configuration information of all candidate cells initiated by the second network node is to be retained; or
in a case that the second indication information is correspondingly configured for a first configuration scenario, the second indication information indicates that configuration information of all candidate cells in the first configuration scenario is to be deleted; or
in a case that the third indication information is correspondingly configured for a second configuration scenario, the third indication information indicates that configuration information of all candidate cells in the second configuration scenario is to be retained.

In some embodiments, the configuration information of the N candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, the configuration information of the P candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, the cell group change includes at least one of the following:
a conditional reconfiguration of conditional handover during running of a first timer after a cell selection is performed;
a cell group change after successful completion of a random access procedure in the MCG or the SCG;
MCG handover or SCG handover;
conditional handover CHO;
conditional primary secondary cell addition CPA; and
a conditional primary secondary cell change CPC.

In some embodiments, the first indication information is included in a radio resource control RRC reconfiguration message.

In some embodiments, the first indication information is included in at least one of the following information elements:
a conditional reconfiguration information element corresponding to the MCG; and
a conditional reconfiguration information element corresponding to the SCG.

In some embodiments, the configuration information of the N candidate cells further includes at least one of the following:
candidate cells configured in the MCG and/or the SCG;
a conditional handover CHO candidate cell;
a conditional primary secondary cell addition or change CPAC candidate cell carried in a CHO candidate cell configuration;
a used candidate cell;
a source primary secondary cell source PSCell on which a CPAC procedure is performed;
a target candidate cell on which a CPAC fails to be performed;
a primary secondary cell before the SCG change;
a candidate cell that is released or not configured in a measurement configuration associated with an execution condition;
a candidate cell whose conditional reconfiguration is a Delta configuration; and
an intra-secondary-node conditional primary secondary cell change intra-SN CPC candidate cell.

In some embodiments, the configuration information of the P candidate cells further includes:
candidate cells configured in the MCG and/or the SCG.

An embodiment of this application provides a candidate cell processing apparatus, applied to a network-side device 400. As shown in FIG. 5, the apparatus includes:
a sending module 410, configured to send configuration information of M candidate cells to a terminal, where M is a positive integer; and
a second processing module 420, configured to perform at least one of the following after a cell group change:
   deleting configuration information of N candidate cells, where N is a positive integer less than M;
   retaining configuration information of P candidate cells, where P is a positive integer less than or equal to M;
   in a case that first indication information indicates that the configuration information of all the candidate cells is to be deleted, deleting the configuration information of the M candidate cells;
   in a case that second indication information indicates that configuration information of candidate cells to be deleted is the configuration information of all the candidate cells, deleting the configuration information of the M candidate cells; and
   in a case that third indication information indicates that configuration information of no candidate cell is to be retained, deleting the configuration information of the M candidate cells, where
   the first indication information is used to indicate whether to delete the configuration information of all the candidate cells;
   the second indication information is used to indicate the configuration information of the candidate cells to be deleted;
   the third indication information is used to indicate configuration information of candidate cells to be retained; and
   the cell group change includes a change of a master cell group MCG and/or a secondary cell group SCG.

In this embodiment of this application, after the cell group change, the configuration information of all the candidate cells may not be deleted, and configuration information of some candidate cells may be retained. Therefore, after the cell group change, the terminal can continue to perform a procedure of conditional handover (CHO), conditional primary secondary cell addition (CPA), or a conditional primary secondary cell change (CPC) based on the previously configured configuration information of the candidate cells, and the network-side device does not need to perform a reconfiguration.

In some embodiments, the configuration information of the candidate cells includes the candidate cells and/or configuration information associated with the candidate cells, where the configuration information includes a conditional reconfiguration and/or a trigger condition for performing the conditional reconfiguration.

In some embodiments, in a case that the first indication information indicates that the configuration information of all the candidate cells is not to be deleted, the second processing module 420 is configured to delete the configuration information of the N candidate cells; or
in some embodiments, in a case that the first indication information indicates that the configuration information of all the candidate cells is not to be deleted, the second processing module 420 is configured to retain the configuration information of the P candidate cells.

In some embodiments, the second processing module 420 is configured to determine to delete the configuration information of the N candidate cells based on the second indication information or the third indication information, where the second indication information is used to indicate the configuration information of the candidate cells to be deleted, and the third indication information is used to indicate the configuration information of the candidate cells to be retained.

In some embodiments, the second processing module 420 is configured to determine to retain the configuration information of the P candidate cells based on the second indication information or the third indication information, where the second indication information is used to indicate the configuration information of the candidate cells to be deleted, and the third indication information is used to indicate the configuration information of the candidate cells to be retained.

In some embodiments, the first indication information explicitly indicates whether to delete the configuration information of all the candidate cells, or
whether to delete the configuration information of all the candidate cells is indicated by whether the first indication information is configured.

In some embodiments, the second indication information or the third indication information is configured for a target object, and the target object includes at least one of the following:
configuration information of each candidate cell;
each cell group;
each network node; and
each configuration scenario, where the configuration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, in a case that the second indication information is correspondingly configured for configuration information of a first candidate cell, the second indication information indicates that the configuration information of the first candidate cell is to be deleted; or
in a case that the third indication information is correspondingly configured for configuration information of a second candidate cell, the third indication information indicates that the configuration information of the second candidate cell is to be retained; or
in a case that the second indication information is correspondingly configured for a first cell group, the second indication information indicates that configuration information of all candidate cells in the first cell group is to be deleted; or
in a case that the third indication information is correspondingly configured for a second cell group, the third indication information indicates that configuration information of all candidate cells in the second cell group is to be retained; or
in a case that the second indication information is correspondingly configured for a first network node, the second indication information indicates that configuration information of all candidate cells initiated by the first network node is to be deleted; or
in a case that the third indication information is correspondingly configured for a second network node, the third indication information indicates that configuration information of all candidate cells initiated by the second network node is to be retained; or
in a case that the second indication information is correspondingly configured for a first configuration scenario, the second indication information indicates that configuration information of all candidate cells in the first configuration scenario is to be deleted; or
in a case that the third indication information is correspondingly configured for a second configuration scenario, the third indication information indicates that configuration information of all candidate cells in the second configuration scenario is to be retained.

In some embodiments, the configuration information of the N candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, the configuration information of the P candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, the cell group change includes at least one of the following:
a conditional reconfiguration of conditional handover during running of a first timer after a cell selection is performed;
a cell group change after successful completion of a random access procedure in the MCG or the SCG;
MCG handover or SCG handover;
conditional handover CHO;
conditional primary secondary cell addition CPA; and
a conditional primary secondary cell change CPC.

In some embodiments, the first indication information is included in a radio resource control RRC reconfiguration message.

In some embodiments, the first indication information is included in at least one of the following information elements:
a conditional reconfiguration information element corresponding to the MCG; and
a conditional reconfiguration information element corresponding to the SCG.

In some embodiments, the configuration information of the N candidate cells further includes at least one of the following:
candidate cells configured in the MCG and/or the SCG;
a conditional handover CHO candidate cell;
a conditional primary secondary cell addition or change CPAC candidate cell carried in a CHO candidate cell configuration;
a used candidate cell;
a source primary secondary cell source PSCell on which a CPAC procedure is performed;
a target candidate cell on which a CPAC fails to be performed;
a primary secondary cell before the SCG change;
a candidate cell that is released or not configured in a measurement configuration associated with an execution condition;
a candidate cell whose conditional reconfiguration is a Delta configuration; and
an intra-secondary-node conditional primary secondary cell change intra-SN CPC candidate cell.

In some embodiments, the configuration information of the P candidate cells further includes:
retaining candidate cells configured in the MCG and/or the SCG.

In some embodiments, in a case that at least one candidate cell is retained, the network-side device does not change a measurement configuration associated with a conditional reconfiguration in an RRC reconfiguration procedure, where the measurement configuration includes at least one of the following associated with an execution condition:
a measurement identifier MeasID;
a measurement object MeasObject;
a measurement report configuration MeasReportConfig; and
a conditional trigger configuration.

In some embodiments, after an RRC reconfiguration procedure succeeds, the MN instructs another target candidate secondary node to cancel configuration information of a specific candidate cell, where the configuration information of the specific candidate cell includes at least one of the following:
configuration information of a candidate cell not configured with the first indication information;
configuration information of a candidate cell not configured with the third indication information;
configuration information of a candidate cell configured with the second indication information;
configuration information of the candidate cells configured in the MCG and/or the SCG;
configuration information of the CHO candidate cell;
configuration information of a candidate cell carried in the CHO candidate cell configuration;
configuration information of the used candidate cell;
the source PSCell on which the CPAC procedure is performed;
the target candidate cell on which the CPAC fails to be performed;
the primary secondary cell before the SCG change;
configuration information of the candidate cell that is released or not configured in the measurement configuration associated with the execution condition;
configuration information of the candidate cell whose conditional reconfiguration is the Delta configuration;
configuration information of the intra-secondary-node conditional primary secondary cell change intra-SN CPC candidate cell;
configuration information of a candidate cell in the conditional reconfiguration procedure initiated by the MN and/or the SN; and
configuration information of a candidate cell in the preset conditional reconfiguration scenario, where the preset conditional reconfiguration scenario includes at least one of the following: the master node initiated conditional primary secondary cell addition, the master node initiated inter-secondary-node conditional primary secondary cell change, the intra-secondary-node conditional primary secondary cell change, and the secondary node initiated inter-secondary-node conditional primary secondary cell change.

The candidate cell processing apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The candidate cell processing apparatus provided in this embodiment of this application can implement each procedure implemented in the method embodiments in FIG. 2 and FIG. 3, with the same technical effect achieved. To avoid repetition, details are not described herein again.

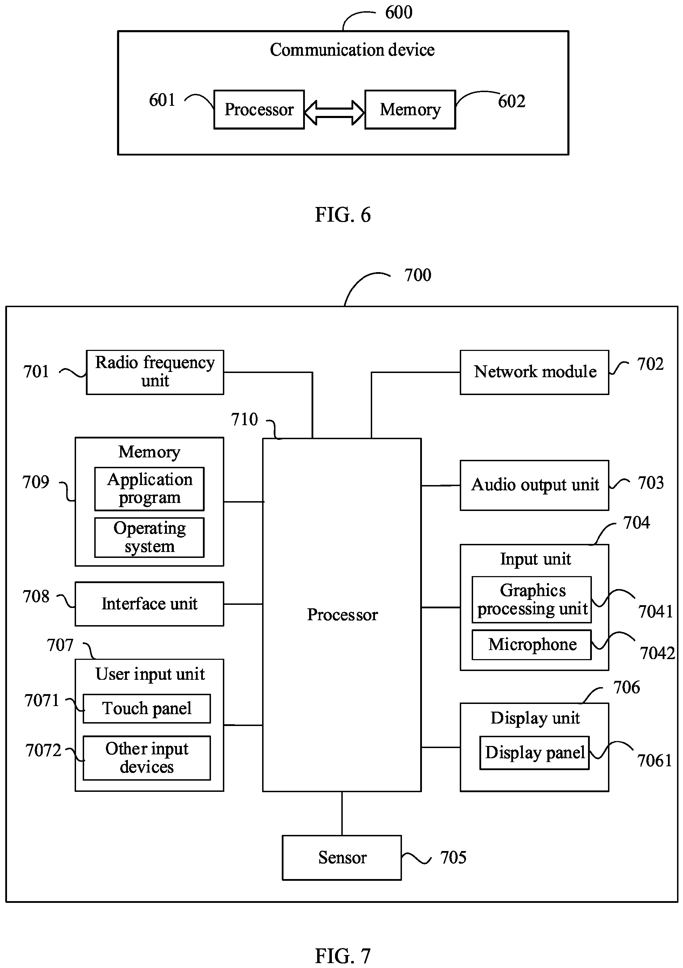

Optionally, as shown in FIG. 6, an embodiment of this application further provides a communication device 600, including a processor 601 and a memory 602. The memory 602 stores a program or instructions capable of running on the processor 601. For example, when the communication device 600 is a network-side device, and the program or instructions are executed by the processor 601, the steps of the foregoing embodiment of the candidate cell processing method are implemented, with the same technical effect achieved. When the communication device 600 is a terminal, and the program or instructions are executed by the processor 601, the steps of the foregoing embodiment of the candidate cell processing method are implemented, with the same technical effect achieved. To avoid repetition, details are not described herein again.

An embodiment of this application further provides a network-side device. The network-side device includes a processor and a memory. The memory stores a program or instructions capable of running on the processor. When the program or instructions are executed by the processor, the steps of the foregoing candidate cell processing method are implemented.

An embodiment of this application further provides a network-side device, including a processor and a communication interface. The communication interface is configured to send configuration information of M candidate cells to a terminal, where M is a positive integer; and
the processor is configured to perform at least one of the following after a cell group change:
deleting configuration information of N candidate cells, where N is a positive integer less than M;
retaining configuration information of P candidate cells, where P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, where
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change includes a change of a master cell group MCG and/or a secondary cell group SCG.

An embodiment of this application further provides a terminal. The terminal includes a processor and a memory. The memory stores a program or instructions capable of running on the processor. When the program or instructions are executed by the processor, the steps of the foregoing candidate cell processing method are implemented.

An embodiment of this application further provides a terminal, including a processor and a communication interface. The communication interface is configured to receive configuration information of M candidate cells configured by a network-side device, where M is a positive integer; and the processor is configured to perform at least one of the following after a cell group change:
deleting configuration information of N candidate cells, where N is a positive integer less than M;
retaining configuration information of P candidate cells, where P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, where
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change includes a change of a master cell group MCG and/or a secondary cell group SCG.

An embodiment of this application further provides a terminal, including a processor and a communication interface. The terminal embodiment corresponds to the foregoing terminal-side method embodiment, and each implementation procedure and implementation of the foregoing method embodiment can be applied to the terminal embodiment, with the same technical effect achieved. Specifically, FIG. 7 is a schematic diagram of a hardware structure of a terminal for implementing an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 710.

In some embodiments, the processor 710 is configured to: receive configuration information of M candidate cells configured by a network-side device, where M is a positive integer; and after a cell group change, perform at least one of the following:
deleting configuration information of N candidate cells, where N is a positive integer less than M;
retaining configuration information of P candidate cells, where P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, where
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change includes a change of a master cell group MCG and/or a secondary cell group SCG.

In some embodiments, the configuration information of the candidate cells includes the candidate cells and/or configuration information associated with the candidate cells, where the configuration information includes a conditional reconfiguration and/or a trigger condition for performing the conditional reconfiguration.

In some embodiments, in a case that the first indication information indicates that the configuration information of all the candidate cells is not to be deleted, the processor 710 is configured to delete the configuration information of the N candidate cells; or
in a case that the first indication information indicates that the configuration information of all the candidate cells is not to be deleted, the processor 710 is configured to retain the configuration information of the P candidate cells.

In some embodiments, the processor 710 is configured to determine to delete the configuration information of the N candidate cells based on the second indication information or the third indication information, where the second indication information is used to indicate the configuration information of the candidate cells to be deleted, and the third indication information is used to indicate the configuration information of the candidate cells to be retained.

In some embodiments, the processor 710 is configured to determine to retain the configuration information of the P candidate cells based on the second indication information or the third indication information, where the second indication information is used to indicate the configuration information of the candidate cells to be deleted, and the third indication information is used to indicate the configuration information of the candidate cells to be retained.

In some embodiments, the first indication information explicitly indicates whether to delete the configuration information of all the candidate cells, or
whether to delete the configuration information of all the candidate cells is indicated by whether the first indication information is configured.

In some embodiments, the second indication information or the third indication information is configured for a target object, and the target object includes at least one of the following:
configuration information of each candidate cell;
each cell group;
each network node; and
each configuration scenario, where the configuration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, in a case that the second indication information is correspondingly configured for configuration information of a first candidate cell, the second indication information indicates that the configuration information of the first candidate cell is to be deleted; or
in a case that the third indication information is correspondingly configured for configuration information of a second candidate cell, the third indication information indicates that the configuration information of the second candidate cell is to be retained; or
in a case that the second indication information is correspondingly configured for a first cell group, the second indication information indicates that configuration information of all candidate cells in the first cell group is to be deleted; or
in a case that the third indication information is correspondingly configured for a second cell group, the third indication information indicates that configuration information of all candidate cells in the second cell group is to be retained; or
in a case that the second indication information is correspondingly configured for a first network node, the second indication information indicates that configuration information of all candidate cells initiated by the first network node is to be deleted; or
in a case that the third indication information is correspondingly configured for a second network node, the third indication information indicates that configuration information of all candidate cells initiated by the second network node is to be retained; or
in a case that the second indication information is correspondingly configured for a first configuration scenario, the second indication information indicates that configuration information of all candidate cells in the first configuration scenario is to be deleted; or
in a case that the third indication information is correspondingly configured for a second configuration scenario, the third indication information indicates that configuration information of all candidate cells in the second configuration scenario is to be retained.

In some embodiments, the configuration information of the N candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, the configuration information of the P candidate cells includes at least one of the following:
candidate cells in a conditional reconfiguration procedure initiated by a master node MN and/or a secondary node SN; and
candidate cells in a preset conditional reconfiguration scenario, where the preset conditional reconfiguration scenario includes at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

In some embodiments, the cell group change includes at least one of the following:
a conditional reconfiguration of conditional handover during running of a first timer after a cell selection is performed;
a cell group change after successful completion of a random access procedure in the MCG or the SCG;
MCG handover or SCG handover;
conditional handover CHO;
conditional primary secondary cell addition CPA; and
a conditional primary secondary cell change CPC.

In some embodiments, the first indication information is included in a radio resource control RRC reconfiguration message.

In some embodiments, the first indication information is included in at least one of the following information elements:
a conditional reconfiguration information element corresponding to the MCG; and
a conditional reconfiguration information element corresponding to the SCG.

In some embodiments, the configuration information of the N candidate cells further includes at least one of the following:
candidate cells configured in the MCG and/or the SCG;
a conditional handover CHO candidate cell;
a conditional primary secondary cell addition or change CPAC candidate cell carried in a CHO candidate cell configuration;
a used candidate cell;
a source primary secondary cell source PSCell on which a CPAC procedure is performed;
a target candidate cell on which a CPAC fails to be performed;
a primary secondary cell before the SCG change;
a candidate cell that is released or not configured in a measurement configuration associated with an execution condition;
a candidate cell whose conditional reconfiguration is a Delta configuration; and
an intra-secondary-node conditional primary secondary cell change intra-SN CPC candidate cell.

In some embodiments, the configuration information of the P candidate cells further includes:
candidate cells configured in the MCG and/or the SCG.

An embodiment of this application further provides a network-side device, including a processor and a communication interface. The network-side device embodiment corresponds to the foregoing method embodiment of the network-side device, and each implementation procedure and implementation of the foregoing method embodiment can be applied to the network-side device embodiment, with the same technical effect achieved.

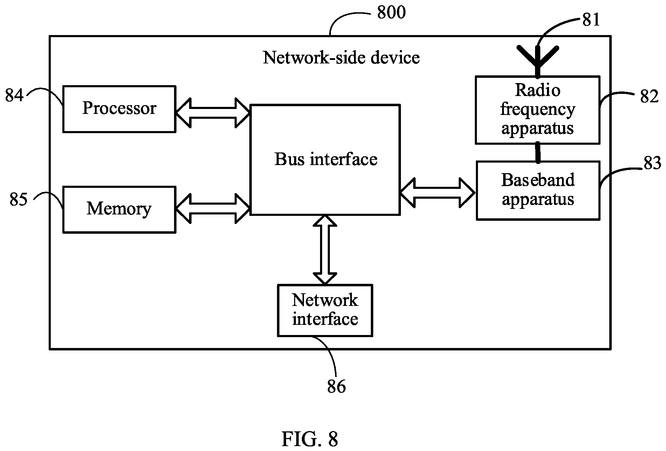

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method performed by the network-side device in the foregoing embodiment may be implemented in the baseband apparatus 83. The baseband apparatus 83 includes a baseband processor.

The baseband apparatus 83 may include, for example, at least one baseband unit, where a plurality of chips are disposed on the baseband unit. As shown in FIG. 8, one of the chips is, for example, the baseband processor, connected to the memory 85 by using a bus interface, to invoke a program in the memory 85 to perform the operation of the network device shown in the foregoing method embodiment.

The network-side device may further include a network interface 86, where the interface is, for example, a common public radio interface (common public radio interface, CPRI).

Specifically, the network-side device 800 in this embodiment of the present invention further includes a program or instructions stored in the memory 85 and capable of running on the processor 84. When the processor 84 invokes the program or instructions in the memory 85, the foregoing candidate cell processing method is performed, with the same technical effect achieved. To avoid repetition, details are not described herein again.

An embodiment of this application further provides a readable storage medium. The readable storage medium stores a program or instructions. When the program or instructions are executed by a processor, each procedure of the foregoing embodiment of the candidate cell processing method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each procedure of the foregoing embodiment of the candidate cell processing method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each procedure of the foregoing embodiment of the candidate cell processing method, with the same technical effect achieved. To avoid repetition, details are not described herein again.

An embodiment of this application further provides a communication system, including a network-side device and a terminal. The network-side device may be configured to perform the steps of the foregoing candidate cell processing method. The terminal may be configured to perform the steps of the foregoing candidate cell processing method.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of the present disclosure.

A person skilled in the art may clearly understand that, for the purpose of convenient and brief description, for a detailed working process of the foregoing system, apparatus, and unit, refer to a corresponding process in the foregoing method embodiments, and details are not described herein again.

In the embodiments provided in this application, it should be understood that the disclosed apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in the embodiments.

In addition, functional units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure substantially or parts contributing to the prior art or parts of the technical solutions may be embodied in a form of a software product, and the computer software product is stored in a storage medium, including several instructions for enabling a computer device (which may be a personal computer, a server, a network device, or the like) to perform all or a part of the steps of the method in each embodiment of the present disclosure. The foregoing storage medium includes: any medium that can store program code, such as a USB flash drive, a removable hard disk, a ROM, a RAM, a magnetic disk, or an optical disc.

A person of ordinary skill in the art may understand that all or a part of the procedures of the foregoing method embodiments may be implemented by related hardware controlled by a computer program. The program may be stored in a computer-readable storage medium. When the program is executed, the procedures of the foregoing method embodiments may be performed. The storage medium may include a magnetic disk, an optical disc, a read-only memory (Read-Only Memory, ROM), a random access memory (Random Access Memory, RAM), or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A candidate cell processing method, comprising:
receiving, by a terminal, configuration information of M candidate cells configured by a network-side device, wherein M is a positive integer; and
after a cell group change, performing, by the terminal, at least one of the following:
deleting configuration information of N candidate cells, wherein N is a positive integer less than M;
retaining configuration information of P candidate cells, wherein P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, wherein
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change comprises a change of a master cell group MCG and/or a secondary cell group SCG.

2. The method according to claim 1, wherein
the configuration information of the candidate cells comprises the candidate cells and/or configuration information associated with the candidate cells, wherein the configuration information comprises a conditional reconfiguration and/or a trigger condition for performing the conditional reconfiguration.

3. The method according to claim 1, wherein
the deleting configuration information of N candidate cells comprises: in a case that the first indication information indicates that the configuration information of all the candidate cells is not to be deleted, deleting the configuration information of the N candidate cells; or
the retaining configuration information of P candidate cells comprises: in a case that the first indication information indicates that the configuration information of all the candidate cells is not to be deleted, retaining the configuration information of the P candidate cells.

4. The method according to claim 1 or 3, wherein the deleting configuration information of N candidate cells comprises:
determining to delete the configuration information of the N candidate cells based on the second indication information or the third indication information, wherein the second indication information is used to indicate the configuration information of the candidate cells to be deleted, and the third indication information is used to indicate the configuration information of the candidate cells to be retained.

5. The method according to claim 1 or 3, wherein the retaining configuration information of P candidate cells comprises:
determining to retain the configuration information of the P candidate cells based on the second indication information or the third indication information, wherein the second indication information is used to indicate the configuration information of the candidate cells to be deleted, and the third indication information is used to indicate the configuration information of the candidate cells to be retained.

6. The method according to any one of claims 1 to 5, wherein
the first indication information explicitly indicates whether to delete the configuration information of all the candidate cells, or
whether to delete the configuration information of all the candidate cells is indicated by whether the first indication information is configured.

7. The method according to any one of claims 1 to 6, wherein the second indication information or the third indication information is configured for a target object, and the target object comprises at least one of the following:
configuration information of each candidate cell;
each cell group;
each network node; and
each configuration scenario, wherein the configuration scenario comprises at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

8. The method according to any one of claims 1 to 7, wherein
in a case that the second indication information is correspondingly configured for configuration information of a first candidate cell, the second indication information indicates that the configuration information of the first candidate cell is to be deleted; or
in a case that the third indication information is correspondingly configured for configuration information of a second candidate cell, the third indication information indicates that the configuration information of the second candidate cell is to be retained; or
in a case that the second indication information is correspondingly configured for a first cell group, the second indication information indicates that configuration information of all candidate cells in the first cell group is to be deleted; or
in a case that the third indication information is correspondingly configured for a second cell group, the third indication information indicates that configuration information of all candidate cells in the second cell group is to be retained; or
in a case that the second indication information is correspondingly configured for a first network node, the second indication information indicates that configuration information of all candidate cells initiated by the first network node is to be deleted; or
in a case that the third indication information is correspondingly configured for a second network node, the third indication information indicates that configuration information of all candidate cells initiated by the second network node is to be retained; or
in a case that the second indication information is correspondingly configured for a first configuration scenario, the second indication information indicates that configuration information of all candidate cells in the first configuration scenario is to be deleted; or
in a case that the third indication information is correspondingly configured for a second configuration scenario, the third indication information indicates that configuration information of all candidate cells in the second configuration scenario is to be retained.

9. The method according to claim 1, wherein the configuration information of the N candidate cells comprises at least one of the following:
candidate cells in a conditional reconfiguration procedure initiated by a master node MN and/or a secondary node SN; and
candidate cells in a preset conditional reconfiguration scenario, wherein the preset conditional reconfiguration scenario comprises at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

10. The method according to claim 1, wherein the configuration information of the P candidate cells comprises at least one of the following:
candidate cells in a conditional reconfiguration procedure initiated by a master node MN and/or a secondary node SN; and
candidate cells in a preset conditional reconfiguration scenario, wherein the preset conditional reconfiguration scenario comprises at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

11. The method according to any one of claims 1 to 10, wherein the cell group change comprises at least one of the following:
a conditional reconfiguration of conditional handover during running of a first timer after a cell selection is performed;
a cell group change after successful completion of a random access procedure in the MCG or the SCG;
MCG handover or SCG handover;
conditional handover CHO;
conditional primary secondary cell addition CPA; and
a conditional primary secondary cell change CPC.

12. The method according to any one of claims 1 to 11, wherein the first indication information is comprised in a radio resource control RRC reconfiguration message.

13. The method according to claim 12, wherein the first indication information is comprised in at least one of the following information elements:
a conditional reconfiguration information element corresponding to the MCG; and
a conditional reconfiguration information element corresponding to the SCG.

14. The method according to any one of claims 1 to 13, wherein the configuration information of the N candidate cells further comprises at least one of the following:
candidate cells configured in the MCG and/or the SCG;
a conditional handover CHO candidate cell;
a conditional primary secondary cell addition or change CPAC candidate cell carried in a CHO candidate cell configuration;
a used candidate cell;
a source primary secondary cell source PSCell on which a CPAC procedure is performed;
a target candidate cell on which a CPAC fails to be performed;
a primary secondary cell before the SCG change;
a candidate cell that is released or not configured in a measurement configuration associated with an execution condition;
a candidate cell whose conditional reconfiguration is a Delta configuration; and
an intra-secondary-node conditional primary secondary cell change intra-SN CPC candidate cell.

15. The method according to any one of claims 1 to 13, wherein the configuration information of the P candidate cells further comprises:
candidate cells configured in the MCG and/or the SCG.

16. A candidate cell processing method, comprising:
sending, by a network-side device, configuration information of M candidate cells to a terminal, wherein M is a positive integer; and
after a cell group change, performing, by the network-side device, at least one of the following:
deleting configuration information of N candidate cells, wherein N is a positive integer less than M;
retaining configuration information of P candidate cells, wherein P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, wherein
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change comprises a change of a master cell group MCG and/or a secondary cell group SCG.

17. The method according to claim 16, wherein
the configuration information of the candidate cells comprises the candidate cells and/or configuration information associated with the candidate cells, wherein the configuration information comprises a conditional reconfiguration and/or a trigger condition for performing the conditional reconfiguration.

18. The method according to claim 16, wherein
the deleting configuration information of N candidate cells comprises: in a case that the first indication information indicates that the configuration information of all the candidate cells is not to be deleted, deleting the configuration information of the N candidate cells; or
the retaining configuration information of P candidate cells comprises: in a case that the first indication information indicates that the configuration information of all the candidate cells is not to be deleted, retaining the configuration information of the P candidate cells.

19. The method according to claim 16 or 18, wherein the deleting configuration information of N candidate cells comprises:
determining to delete the configuration information of the N candidate cells based on the second indication information or the third indication information, wherein the second indication information is used to indicate the configuration information of the candidate cells to be deleted, and the third indication information is used to indicate the configuration information of the candidate cells to be retained.

20. The method according to claim 16 or 18, wherein the retaining configuration information of P candidate cells comprises:
determining to retain the configuration information of the P candidate cells based on the second indication information or the third indication information, wherein the second indication information is used to indicate the configuration information of the candidate cells to be deleted, and the third indication information is used to indicate the configuration information of the candidate cells to be retained.

21. The method according to any one of claims 16 to 20, wherein
the first indication information explicitly indicates whether to delete the configuration information of all the candidate cells, or
whether to delete the configuration information of all the candidate cells is indicated by whether the first indication information is configured.

22. The method according to any one of claims 16 to 21, wherein the second indication information or the third indication information is configured for a target object, and the target object comprises at least one of the following:
configuration information of each candidate cell;
each cell group;
each network node; and
each configuration scenario, wherein the configuration scenario comprises at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

23. The method according to any one of claims 16 to 22, wherein
in a case that the second indication information is correspondingly configured for configuration information of a first candidate cell, the second indication information indicates that the configuration information of the first candidate cell is to be deleted; or
in a case that the third indication information is correspondingly configured for configuration information of a second candidate cell, the third indication information indicates that the configuration information of the second candidate cell is to be retained; or
in a case that the second indication information is correspondingly configured for a first cell group, the second indication information indicates that configuration information of all candidate cells in the first cell group is to be deleted; or
in a case that the third indication information is correspondingly configured for a second cell group, the third indication information indicates that configuration information of all candidate cells in the second cell group is to be retained; or
in a case that the second indication information is correspondingly configured for a first network node, the second indication information indicates that configuration information of all candidate cells initiated by the first network node is to be deleted; or
in a case that the third indication information is correspondingly configured for a second network node, the third indication information indicates that configuration information of all candidate cells initiated by the second network node is to be retained; or
in a case that the second indication information is correspondingly configured for a first configuration scenario, the second indication information indicates that configuration information of all candidate cells in the first configuration scenario is to be deleted; or
in a case that the third indication information is correspondingly configured for a second configuration scenario, the third indication information indicates that configuration information of all candidate cells in the second configuration scenario is to be retained.

24. The method according to claim 16, wherein the configuration information of the N candidate cells comprises at least one of the following:
candidate cells in a conditional reconfiguration procedure initiated by a master node MN and/or a secondary node SN; and
candidate cells in a preset conditional reconfiguration scenario, wherein the preset conditional reconfiguration scenario comprises at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

25. The method according to claim 16, wherein the configuration information of the P candidate cells comprises at least one of the following:
candidate cells in a conditional reconfiguration procedure initiated by a master node MN and/or a secondary node SN; and
candidate cells in a preset conditional reconfiguration scenario, wherein the preset conditional reconfiguration scenario comprises at least one of the following: master node initiated conditional primary secondary cell addition, a master node initiated inter-secondary-node conditional primary secondary cell change, an intra-secondary-node conditional primary secondary cell change, and a secondary node initiated inter-secondary-node conditional primary secondary cell change.

26. The method according to any one of claims 16 to 25, wherein the cell group change comprises at least one of the following:
a conditional reconfiguration of conditional handover during running of a first timer after a cell selection is performed;
a cell group change after successful completion of a random access procedure in the MCG or the SCG;
MCG handover or SCG handover;
conditional handover CHO;
conditional primary secondary cell addition CPA; and
a conditional primary secondary cell change CPC.

27. The method according to any one of claims 16 to 26, wherein the first indication information is comprised in a radio resource control RRC reconfiguration message.

28. The method according to claim 27, wherein the first indication information is comprised in at least one of the following information elements:
a conditional reconfiguration information element corresponding to the MCG; and
a conditional reconfiguration information element corresponding to the SCG.

29. The method according to any one of claims 16 to 28, wherein the configuration information of the N candidate cells further comprises at least one of the following:
candidate cells configured in the MCG and/or the SCG;
a conditional handover CHO candidate cell;
a conditional primary secondary cell addition or change CPAC candidate cell carried in a CHO candidate cell configuration;
a used candidate cell;
a source primary secondary cell source PSCell on which a CPAC procedure is performed;
a target candidate cell on which a CPAC fails to be performed;
a primary secondary cell before the SCG change;
a candidate cell that is released or not configured in a measurement configuration associated with an execution condition;
a candidate cell whose conditional reconfiguration is a Delta configuration; and
an intra-secondary-node conditional primary secondary cell change intra-SN CPC candidate cell.

30. The method according to any one of claims 16 to 28, wherein the configuration information of the P candidate cells further comprises:
retaining candidate cells configured in the MCG and/or the SCG.

31. The method according to claim 16, wherein in a case that at least one candidate cell is retained, the network-side device does not change a measurement configuration associated with a conditional reconfiguration in an RRC reconfiguration procedure, wherein the measurement configuration comprises at least one of the following associated with an execution condition:
a measurement identifier MeasID;
a measurement object MeasObject;
a measurement report configuration MeasReportConfig; and
a conditional trigger configuration.

32. The method according to any one of claims 16 to 29, wherein the method further comprises:
after an RRC reconfiguration procedure succeeds, instructing, by the MN, another target candidate secondary node to cancel configuration information of a specific candidate cell, wherein the configuration information of the specific candidate cell comprises at least one of the following:
configuration information of a candidate cell not configured with the first indication information;
configuration information of a candidate cell not configured with the third indication information;
configuration information of a candidate cell configured with the second indication information;
configuration information of the candidate cells configured in the MCG and/or the SCG;
configuration information of the CHO candidate cell;
configuration information of a candidate cell carried in the CHO candidate cell configuration;
configuration information of the used candidate cell;
the source PSCell on which the CPAC procedure is performed;
the target candidate cell on which the CPAC fails to be performed;
the primary secondary cell before the SCG change;
configuration information of the candidate cell that is released or not configured in the measurement configuration associated with the execution condition;
configuration information of the candidate cell whose conditional reconfiguration is the Delta configuration;
configuration information of the intra-secondary-node conditional primary secondary cell change intra-SN CPC candidate cell;
configuration information of a candidate cell in the conditional reconfiguration procedure initiated by the MN and/or the SN; and
configuration information of a candidate cell in the preset conditional reconfiguration scenario, wherein the preset conditional reconfiguration scenario comprises at least one of the following: the master node initiated conditional primary secondary cell addition, the master node initiated inter-secondary-node conditional primary secondary cell change, the intra-secondary-node conditional primary secondary cell change, and the secondary node initiated inter-secondary-node conditional primary secondary cell change.

33. A candidate cell processing apparatus, comprising:
a receiving module, configured to receive configuration information of M candidate cells configured by a network-side device, wherein M is a positive integer; and
a first processing module, configured to perform at least one of the following after a cell group change:
deleting configuration information of N candidate cells, wherein N is a positive integer less than M;
retaining configuration information of P candidate cells, wherein P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, wherein
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change comprises a change of a master cell group MCG and/or a secondary cell group SCG.

34. A candidate cell processing apparatus, comprising:
a sending module, configured to send configuration information of M candidate cells to a terminal, wherein M is a positive integer; and
a second processing module, configured to perform at least one of the following after a cell group change:
deleting configuration information of N candidate cells, wherein N is a positive integer less than M;
retaining configuration information of P candidate cells, wherein P is a positive integer less than or equal to M;
in a case that first indication information indicates that the configuration information of all the candidate cells is to be deleted, deleting the configuration information of the M candidate cells;
in a case that second indication information indicates that configuration information of candidate cells to be deleted is the configuration information of all the candidate cells, deleting the configuration information of the M candidate cells; and
in a case that third indication information indicates that configuration information of no candidate cell is to be retained, deleting the configuration information of the M candidate cells, wherein
the first indication information is used to indicate whether to delete the configuration information of all the candidate cells;
the second indication information is used to indicate the configuration information of the candidate cells to be deleted;
the third indication information is used to indicate configuration information of candidate cells to be retained; and
the cell group change comprises a change of a master cell group MCG and/or a secondary cell group SCG.

35. A terminal, comprising a processor and a memory, wherein the memory stores a program or instructions capable of running on the processor, and when the program or instructions are executed by the processor, the steps of the candidate cell processing method according to any one of claims 1 to 15 are implemented.

36. A network-side device, comprising a processor and a memory, wherein the memory stores a program or instructions capable of running on the processor, and when the program or instructions are executed by the processor, the steps of the candidate cell processing method according to any one of claims 16 to 32 are implemented.

37. A readable storage medium, wherein the readable storage medium stores a program or instructions, and when the program or instructions are executed by a processor, the candidate cell processing method according to any one of claims 1 to 15 is implemented, or the steps of the candidate cell processing method according to any one of claims 16 to 32 are implemented.
